(19) Europäisches Patentamt / European Patent Office / Office européen des brevets

(11) **EP 1 840 806 A1**

(12) **EUROPEAN PATENT APPLICATION**

(43) Date of publication:
**03.10.2007 Bulletin 2007/40**

(51) Int Cl.:
***G06Q 10/00*** *(2006.01)*

(21) Application number: **06300290.1**

(22) Date of filing: **28.03.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Amadeus s.a.s**
**06410 Biot (FR)**

(72) Inventors:
• **Viale, Valérie,**
  **Office Méditérranéen de brevets et de marques 06000, NICE (FR)**

• **Raufaste, Nathalie,**
  **Office Méditérranéen de brevets et de marques 06000, NICE (FR)**

(74) Representative: **Decobert, Jean-Pascal et al**
**Office Méditerranéen**
**de Brevets d'Invention**
**Cabinet Hautier**
**20, rue de la Liberté**
**F-06000 Nice (FR)**

(54) **Systems and method of managing an inventory of service resources**

(57)    A method of managing an inventory of service resources offered for sale by a service provider and systems thereof are described. A plurality of criterions to characterize the service resources is first defined. The inventory of service resources is then divided, on the basis of the criterions, into a plurality of elements. Each element comprises an exclusive subset of the service resources sharing common criterion values. A plurality of groups is also created. Groups aggregate those of the elements that have at least one criterion value in common. Groups and elements are what are offered for sale by the service provider. Elements belong in general to several groups.

Service resources are, e.g., travel service or leisure resources such as airplane seats and hotel rooms. Customers or travel agents book in an element or in a group. The invention allows maximizing inventory availability while bookings are done by customers, either on the basis of a specific request (in an element) or on the basis of a more indefinite request (in a group). A specific inventory item is attributed later, i.e., at check-in.

| | Bed | View | Smoking | Capacity |
|---|---|---|---|---|
| E1 | Double | Sea | Yes | 10 |
| E2 | Double | Sea | No | 30 |
| E3 | Double | Garden | Yes | 10 |
| E4 | Double | Garden | No | 20 |
| E5 | King | Sea | Yes | 4 |
| E6 | King | Sea | No | 15 |
| E7 | King | Garden | Yes | 5 |
| E8 | King | Garden | No | 6 |

Total: 100

Figure 1

EP 1 840 806 A1

**Description**

FIELD OF THE INVENTION

The present invention relates to the management of inventories of perishable goods and service resources.

BACKGROUND OF THE INVENTION

Inventory management of extremely perishable goods or resources of service industries that are, at one moment, lost if not sold, such as airplane seats or hotel rooms, and their allocation among a variety of customers is often referred to as revenue management or yield management.

The techniques of yield management are relatively new. They have been developed first by some airline companies in an attempt to increase their revenues in an extremely competitive business after deregulation occurred in the 80's. Hotel and car rental industries have soon followed. On the subject of yield management, among numerous publications, one may for example refer to a paper by S. Netessine and R. Shumsky (2002), "Introduction to the Theory and Practice of Yield Management" INFORMS Transactions on Education, Vol. 3, No. 1.

Revenue management has since received a considerable attention with the prime, if not unique, objective of increasing supplier revenue. This has often been accomplished in trying to minimize, or just ignoring, at booking time, customer requests that are not always directly convertible into a revenue increase. On the viewpoint of the supplier of service resources this would uselessly complicate the booking process without any immediate benefit.

Nevertheless, solutions have been proposed to imbed customer requirements early in the reservation process so that to meet customer expectations without compromising the final objective of maximizing revenue. For example, US patent application 0082878 published on June 27, 2002 and entitled "Airline reservation system that supports guaranteed reservations for a preferred category of seating" describes a method of guaranteeing a preferred category of seating at booking time. This is done with attributing a temporary seat until check in thus preserving the possibility of reassigning a passenger to a seat, within its guaranteed preferred category of seating, during the whole booking period or until a predefined date at the expense of having to reassign more and more seats when bookings are increasing and check-in date is closer. Hence, response time may be adversely impacted. Although patent application shows an algorithm which is said to meet this objective it does not really teaches how the elements of the customer requests are defined and could be handled by an automated process susceptible to run in a computerized environment. Moreover, patent application does not teach how this could fit in with the current revenue management techniques largely adopted by most travel service providers. Techniques that are further discussed with the following description of the invention and which include overbooking, market segmentation with booking limits and network optimization.

Hence, it is the main object of the present invention to completely fulfill the requirement of being able to accept most, if not all, of the customer requests at booking time, be they vague (e.g., a double room in a hotel) or very precise (e.g., a double room, with garden-view, non-smoking), while retaining the possibility of maximizing the revenue withdrawn of an inventory of perishable service resources to sell like hotel rooms or airplane seats. Additionally, the method of the invention allows structuring the customer requests and can be automated so as to run from a central reservation system applying all modern revenue management techniques.

Further objects, features and advantages of the present invention will become apparent to the ones skilled in the art upon examination of the following description in reference to the accompanying drawings. It is intended that any additional advantages be incorporated herein.

SUMMARY OF THE INVENTION

A method of managing an inventory of service resources offered for sale by a service provider is described. A plurality of criterions to characterize the service resources is first defined. The inventory of service resources is then divided, on the basis of the criterions, into a plurality of elements. Each element comprises an exclusive subset of the service resources sharing common criterion values. A plurality of groups is also created. Groups aggregate those of the elements that have at least one criterion value in common. Groups and elements are what are offered for sale by the service provider. Elements belong in general to several groups.

Preferably, all meta-groups of elements that can be formed by the union of at least two overlapping groups are computed. Those forming a unique combination of elements from a largest combination of groups are retained. A capacity for each created group and for each computed meta-group is also computed from the capacities of elements. A booking can be done in an element in which case availability values of element, groups and meta-groups containing it are computed. A booking can also be done in a group. In this case the group availability and availabilities of the meta-groups containing it are computed. Any booking also implies that all other element and group availabilities should be reassessed. This involves capping group availabilities by the minimum of availability values found in any of the meta-groups where reassessed groups appear. Then availability of all elements is reassessed in a similar manner, i.e., cannot be higher than the availability of the groups containing this element

Service resources are, e.g., travel service resources such as airplane seats and hotel rooms. Customers or travel agents book in an element or in a group. The novel method allows maximizing inventory availability while bookings are done by customers, either on the basis of a specific request (in an element) or on the basis of a more indefinite request (in a group). A specific inventory item is attributed later, i.e., at check-in.

The novel method allows for booking over a multi-day period. Preferably, all sub-groups, i.e., intersections of two overlapping groups, are considered to compute availabilities.

An inventory mechanism system is described too. The system includes an inventory database and a reservation database and comprises means adapted for interfacing with: a travel service provider, customers and/or travel agents, a revenue management system and a check-in system. System further includes a check-in module, a parser module, an inventory module and a rate module.

A global travel processing system for booking travel service resources offered for sale by a travel service provider to customers is also described. System comprises a mechanism for managing the inventory of travel service resources, a revenue management system for maximizing revenue withdrawn from the sale of said travel resources and a check-in system for attributing the travel resources to customers. The inventory mechanism has means adapted for implementing revenue management techniques, including: means for defining sub-products within the inventory of travel resources, means for setting a level of overbooking, means for setting booking limits and means for setting bid prices to any item within the inventory of travel resources including the sub-products. Means are triggered through instructions received from the revenue management system.

BRIEF DESCRIPTION OF THE DRAWINGS

FIG. 1 depicts an exemplary inventory of items offered for sale organized in elements and groups of elements.

FIG. 2 is another view of the above inventory.

FIG. 3 defines meta-groups and sub-groups that are necessary to compute element and group availabilities after each booking.

FIG.4 is an exemplary inventory of hotel rooms showing how concerned element, group and meta-group availabilities are updated as a result, first of a booking in a group (450), then of a booking in an element (460).

FIG. 5 further describes how the availabilities of all other groups and elements are reassessed after a booking in a group.

FIG. 6 is a flow chart summarizing the operations to be performed after each booking in a group or in an element.

FIG. 7 discusses availability of elements and groups over a multi-day period.

FIG. 8 further discusses, through an example, how availabilities are updated over a multi-day period and the use of sub-groups.

FIG. 9 is a flow chart of the operations to be performed to update availabilities over a multi-day period.

FIG. 10 shows a system implementing an inventory mechanism capable of interfacing with a revenue management system, a check-in system, a travel service provider and customers and/or travel agents.

FIG. 11 gives further examples of how an inventory of items can be adapted to interface with a revenue management system implementing overbooking, market segmentation, booking limits or other revenue management practices.

FIG. 12 is a more detailed description of an inventory.

FIG. 13 depicts examples of product (1310) and subproduct (1320) tables to illustrate overbooking.

FIG. 14 depicts examples of product (1410) and subproduct (1420) tables to illustrate booking limits.

FIG. 15 depicts examples of product (1510) and subproduct (1520) tables to illustrate bid prices.

DETAILED DESCRIPTION

The following detailed description of the invention refers to the accompanying drawings. While the description includes exemplary embodiments, other embodiments are possible, and changes may be made to the embodiments described without departing from the spirit and scope of the invention.

A technique of yield management consists in partitioning an inventory of items offered for sale. For example, an inventory of seats in the coach cabin of a flight is further partitioned into classes of service corresponding to different fare categories. Many different class of service codes are generally used for a same cabin, the coach cabin in this example, even though all of the passengers sit in the same place (class of service codes are also defined for the other cabins, i.e., business and first class). Hence, two persons who have paid different prices may sit next to each other in the coach cabin because their reservations were made with different class of service codes. This is the result of a well-known practice by airlines who are discounting part of their inventory, e.g., if tickets are bought early and with restrictions applying such that being non-refundable.

Overbooking has been also a common practice for many years to manage revenue especially in hotel and airline industries. It is based on the observation that late cancellations and no-shows are always occurring. Hence, providers of such service resources tend to sell more seats or rooms than actually permitted by the physical inventory in order to be able to finally best fill their planes or hotels in the expectation that no-shows will bring the number of reservations that actually materialize below maximum occupancy.

Market segmentation is another revenue management practice that has been introduced in the past decade. For example, providers of travel service resources consider there are two categories of customers: those that are traveling for business and those traveling for leisure. The two types of customers do not behave in a similar way and have different motivations, e.g.: the leisure market segment is much more sensitive to the price than the business segment. However, customers of leisure segment are more likely ready to accept restrictions (e.g., on the permitted travel days or length of stays) while planning well in advance their trip. Hence, to maximize their revenue, service providers have adopted sophisticated practices which typically consist in limiting the booking of the low revenue segment market, in the early part of the reservation time frame, so that the whole inventory cannot be sold early to a single category of customers, i.e., to the leisure market segment customers in this example. Indeed, if not doing so, this may adversely affect their final revenue since they could be often in a situation where they would not have any opportunities left to sell later, at a business price, their travel resources. Hence, booking limits are generally often adapted, in the various booking classes defined by the provider of services, during the whole reservation period, in an attempt to maximize final revenue.

Still another practice of revenue management more recently adopted by airline companies is referred to as network optimization. It mainly consists in optimizing traveler complete itineraries rather than individual trip segments to maximize revenue. Typically, this is the case when a customer buys a ticket for a foreign destination which requires including a domestic flight. This segment of the trip may thus be processed differently by revenue management since it eventually triggers more revenue, through the sale of another expensive segment.

Therefore, customers fit into the here above revenue management practices, which largely conditions travel service providers revenue, even though they just generally ignore them and have their own quite different motivations. A traveler is generally not solely concerned with what is to be paid to get transported but often expresses other strong requests and would like to reserve, e.g., a certain category of seating in a plane such as a window seat or an aisle. Similar situations are encountered with other providers of service resources such as hotel rooms. Room booking implies generally to have to consider a broad range of features. A non-limitative list might include the type and size of beds, the view and floor where room is located and the fact that smoking is permitted or not.

Taking into consideration all the customer requests at booking time is possible without compromising the prime objective of the supplier of service resources which is, eventually, to maximize revenue.

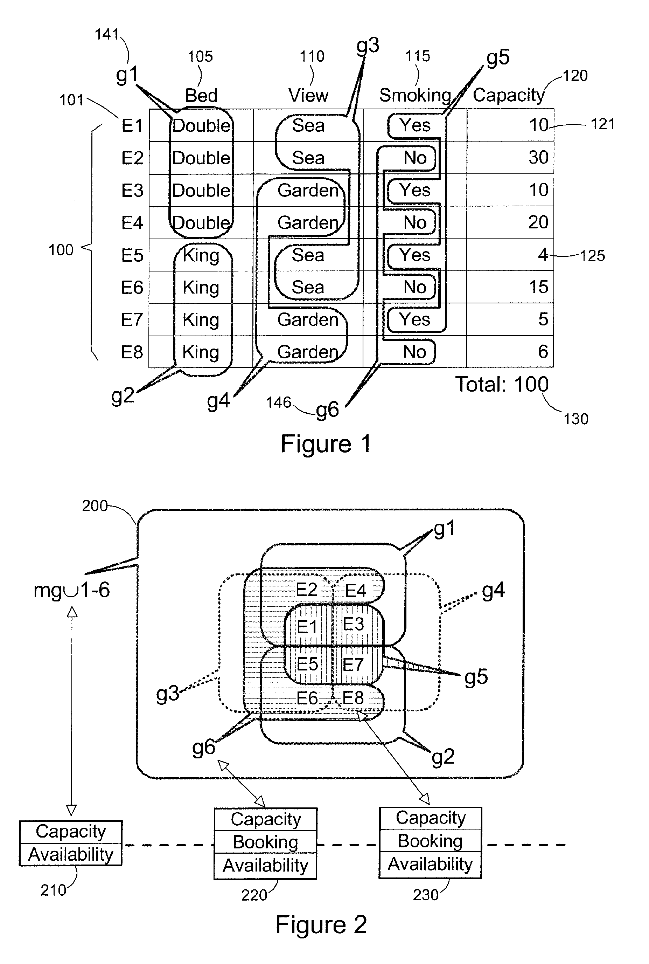

FIG. 1 depicts an inventory of perishable items offered for sale. It is, e.g., a hotel room or a seat in a commercial airplane. Associated revenue is definitively lost if item is not used at the time it is offered.

An inventory is composed of elements (100) here assumed to be sets of hotel rooms. An element is defined by a list of criterions. In this exemplary inventory used to illustrate the invention three criterions have been retained for qualifying the inventory elements: the type of bedding (105), the view (110) and if smoking is permitted or not in room. To each element is associated a capacity (120) which is the number of inventory items that are offered for sale in this element. Hence, first element E1 (101) is a smoking, double room with sea-view. In example of FIG 2 there are ten such items (121), out of a total hotel room inventory (130) of 100, that share the same criterion values thus defining inventory element E1.

Elements, and groups of elements that are further defined here after, are the products that travel service provider is offering for sale to its customers. Hence, a service provider organizes its inventory of items into elements and groups of elements among which customers will have to exercise a choice when booking a particular travel resource, here a hotel room.

As far as this particular example used to illustrate the invention is concerned it is worth noting following points:

-- Inventory table of FIG. 1 may include features not bounded to a binary choice like double or king bed (105) and sea view or garden view. Any criterion defining an element may have a larger plurality of choices (e.g., a hotel may have room types with double, queen, twin, king or single beds). Some rooms may have no view (110) on garden or on sea in which case the elements (100) would be in much larger numbers. With three binary criterions, as shown in FIG. 1, there are possibly 2x2x2 = $2^3$ =8 combinations of elements while if there were 5 types of bedding, 3 types of views and the choice of smoking or not this would lead to have possibly up to 5x3x2 = 30 elements in inventory table.

-- Not all combinations of criterions may actually exist in the inventory. For example, the hotel may not have any smoking sea-view king bed room (permanently, because of the way hotel was built and furnished or because these rooms are not temporarily available if, e.g., they are being revamped). In which case the corresponding capacity (125) should be set to 0 or element E5 removed from inventory.

-- Not all criterions have an associated revenue value. If a sea-view has definitively a value, choosing between a smoking and non-smoking room, even though it is a choice of high importance to many customers (those who want to smoke and those that cannot stand smoke), is not going to trigger any extra revenue to the hotel owner though. It is just an attempt to satisfy and attract more customers thus indirectly increasing revenues because occupation of the hotel would be, on the average, higher.

On the basis of the defined criterions, elements are also organized in groups. In the particular example of FIG. 1 six groups are defined by service provider and referred to as g1 (141) to g6 (146). In this straightforward example of organizing an inventory the groups are built on the basis of a single criterion. Thus, g1 (141) is the group including elements E1 to E4, i.e., the double bed room group. Depending on the criterions retained to build an inventory of items to sell, nothing prevents service provider from organizing groups including more than one criterion. As already mentioned above, elements and groups of elements represent what is advertised for sale by the owner of an inventory. Hence, a customer requesting a double-bed room will be granted a reservation for group g1. Indeed, any of the 70 rooms of that group potentially matches the customer request.

FIG. 2 is just another view of the inventory of FIG. 1 to better show how groups overlap or not. Groups that do not overlap are those that have exclusive criterions such as, in this particular example, a sea-view and a garden-view (i.e., g3 and g4). However, this is totally dependent on the inventory characteristics, i.e., how hotel was built and furnished and how elements and groups have been defined by service provider. In the particular example of FIG. 1 and FIG.2 two overlapping groups, like g1 and g3, are sharing the elements E1 and E2. Although a physical inventory item belongs to only one element, it can however belong to several overlapping groups thus can be offered for sale in any of those groups. Hence, the 10 inventory items (121) belonging to element E1 (101) shown in FIG. 1 can be eventually sold indifferently in any of the groups g1, g3 or g5 (i.e., as a double-bed room, a sea view room or a smoking room).

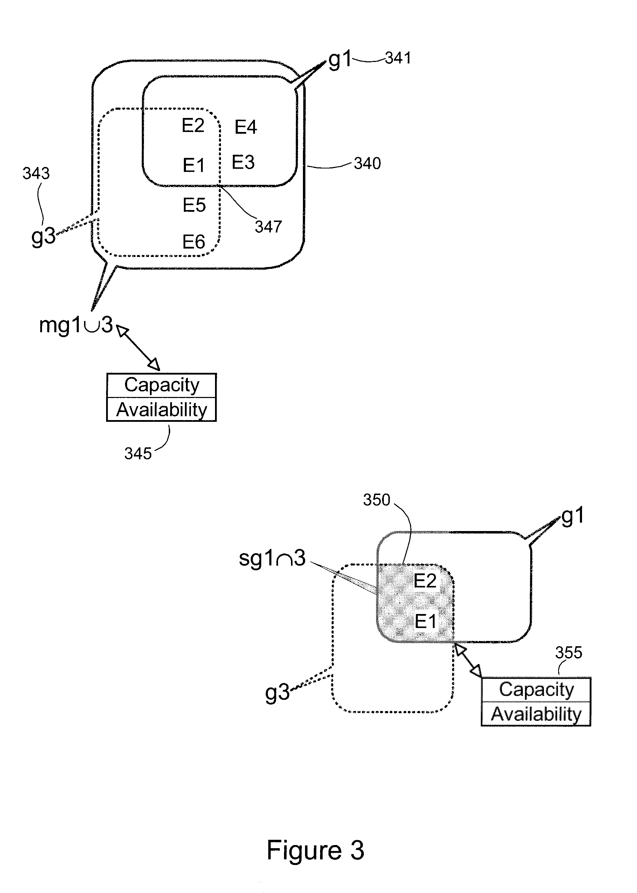

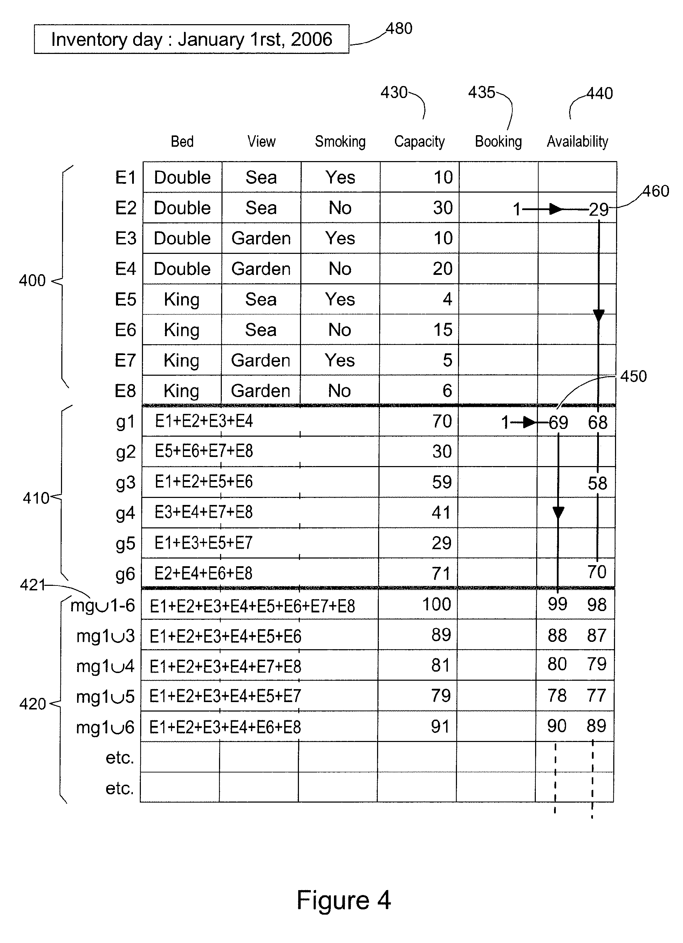

Beyond elements and groups of elements defined by the service provider as being the products offered for sale, the method considers meta-groups. A meta-group is the union of two or more groups that overlap, e.g., the two groups just mentioned: g1 and g3. As shown in FIG. 3 the meta-group mg1∪3 aggregates all elements belonging to the individual groups (341, 343) forming the meta-group (340) .The number of elements of the meta-group and associated capacity (345) is obviously less than the sum of individual group elements since some appear in at least two groups (347). This is the chief reason for having to consider meta-groups. Because groups overlap their availability is not only dependent on bookings done by customers within a particular group but also depends on bookings that occur in the other groups. Thus, meta-groups are mandatory to control inventory availability. There are as many meta-groups as there are chains of groups that overlap. Meta-groups further discussed in FIG. 4 are computed on the basis of how groups have been defined by travel service provider.

As shown in FIG. 2 and in FIG. 3 capacity and availability records are associated with each element like E8 (230), each group, e.g., g6 (220) and each meta-group (210, 345) to keep track of what remains available after each booking or cancellation done in elements or groups (220, 230). Among all computed meta-groups the one that gathers all defined inventory elements, i.e., E1 to E8 in this example (200), represents the total inventory (210). The primary purpose of meta-groups is to keep track of actual room availabilities while bookings in elements and groups are done. Meta-groups and the way they are used are further discussed in the following description of the invention and more particularly in FIG. 4.

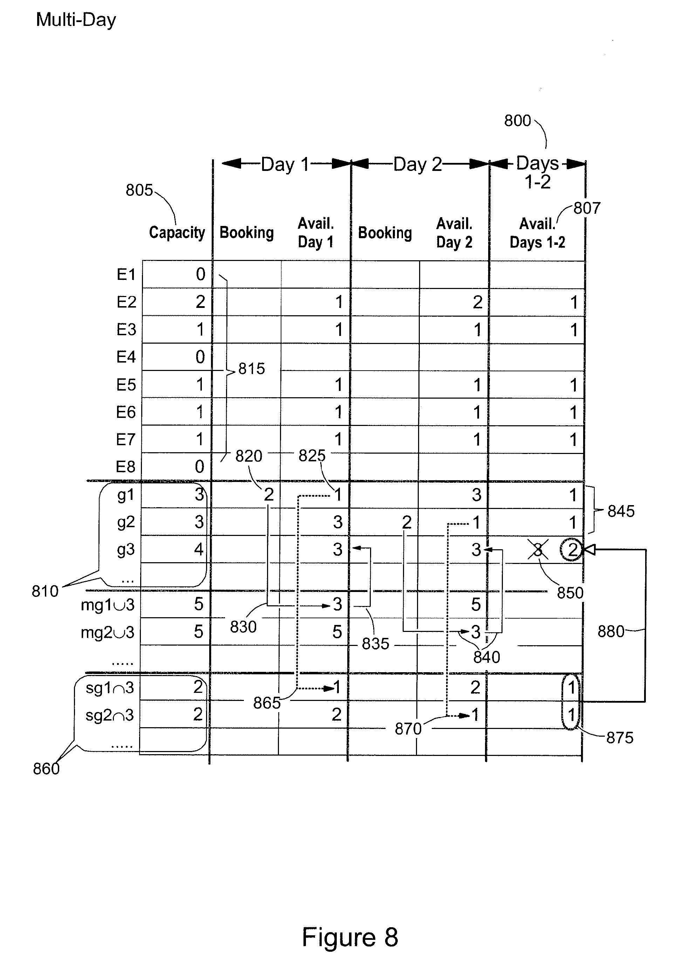

Also, to control the availability over a booking period of more than a single unit of time, i.e., more than one day in the hotel industry, the method needs to consider intersections of overlapping group pairs, e.g., the intersection sg1∩3 of group g1 with group g3 (350). Clearly, the elements belonging to the intersection (i.e., E1 and E2) have in common the criterion values attached to group g1 and group g3, i.e.: double room with sea-view in this example. Group intersections are referred to as sub-groups and have associated capacity and availability records (355) too. The use of sub-groups is further discussed in the following description of the invention starting with FIG. 8.

Thus, having defined groups and meta-groups the inventory table of FIG. 1 can be completed as depicted in FIG 4. On top of the elements previously shown (400) the inventory now includes all the groups (410) that have been defined or approved by the owner of the inventory of items to sell. Meta-groups also appear now in inventory (420). In this particular example used to illustrate the invention the unique combinations of meta-groups listed in following table are considered. Only the first five combinations are however shown in FIG. 4.

| Meta-groups | Elements | Capacity |
|---|---|---|
| $1 \cup 2 \cup 3 \cup 4 \cup 5 \cup 6$ | 1 2 3 4 5 6 7 8 | 100 |
| $1 \cup 3$ | 123456 | 89 |
| $1 \cup 4$ | 123478 | 81 |
| $1 \cup 5$ | 123457 | 79 |
| $1 \cup 6$ | 123468 | 91 |
| $2 \cup 3$ | 125678 | 70 |
| $2 \cup 4$ | 345678 | 60 |
| $2 \cup 5$ | 135678 | 50 |
| $2 \cup 6$ | 245678 | 80 |
| $3 \cup 5$ | 123567 | 74 |
| $3 \cup 6$ | 124568 | 85 |
| $4 \cup 5$ | 134578 | 55 |
| $4 \cup 6$ | 234678 | 86 |
| $1 \cup 3 \cup 6$ | 1234567 | 94 |
| $1 \cup 3 \cup 6$ | 1234568 | 95 |
| $1 \cup 4 \cup 6$ | 1234578 | 85 |
| $1 \cup 4 \cup 6$ | 1234678 | 96 |
| $2 \cup 3 \cup 5$ | 1235678 | 80 |
| $2 \cup 3 \cup 6$ | 1245678 | 90 |
| $2 \cup 4 \cup 5$ | 1345678 | 70 |
| $2 \cup 4 \cup 6$ | 2345678 | 90 |

The invention does not assume any particular method to compute the meta-groups and sub-groups. Once elements and groups have been defined over an inventory of items offered for sale it is straightforward to establish, with the traditional techniques and methods of software engineering, the corresponding meta-groups and sub-groups.

As far as meta-groups are concerned, those that are formed from a unique combination of elements are retained. Duplicate combinations of elements are removed from list. Of two combinations of groups that comprise the same elements, the one encompassing the largest number of groups is kept. As an example of this, in the above table, many combinations of two and three groups, and all combinations of four groups or more, include all defined elements E1 to E8. Thus, the meta-group including all groups (i.e.: mg$\cup$1-6) is listed (421) instead.

For the sub-groups, which are used later when considering multi-day bookings, the intersections of pairs of groups that overlap are retained. Hence, with the particular example of FIG. 1 where 6 groups have been defined, the sub-groups that correspond to the group pairs that overlap (those that have at least one element in common) are considered. They are listed in following table:

| Sub-groups | Elements | Capacity |
|---|---|---|
| $1 \cap 3$ | 1 2 | 40 |
| $1 \cap 4$ | 3 4 | 30 |
| $1 \cap 5$ | 1 3 | 20 |
| $1 \cap 6$ | 2 4 | 50 |
| $2 \cap 3$ | 5 6 | 19 |
| $2 \cap 4$ | 7 8 | 11 |
| $2 \cap 5$ | 5 7 | 9 |
| $2 \cap 6$ | 6 8 | 21 |
| $3 \cap 5$ | 1 5 | 14 |

(continued)

| Sub-groups | Elements | Capacity |
| --- | --- | --- |
| 3∩6 | 26 | 45 |
| 4∩5 | 37 | 15 |
| 4∩6 | 4 8 | 26 |

In FIG. 4, as previously discussed, there is a capacity attached to each defined element, group and computed meta-group (430). A booking count column (435) and an availability column (440), updated after each booking or cancellation, also appear. Capacity of elements is given by service provider; capacities of groups and meta-groups are calculated by the system.

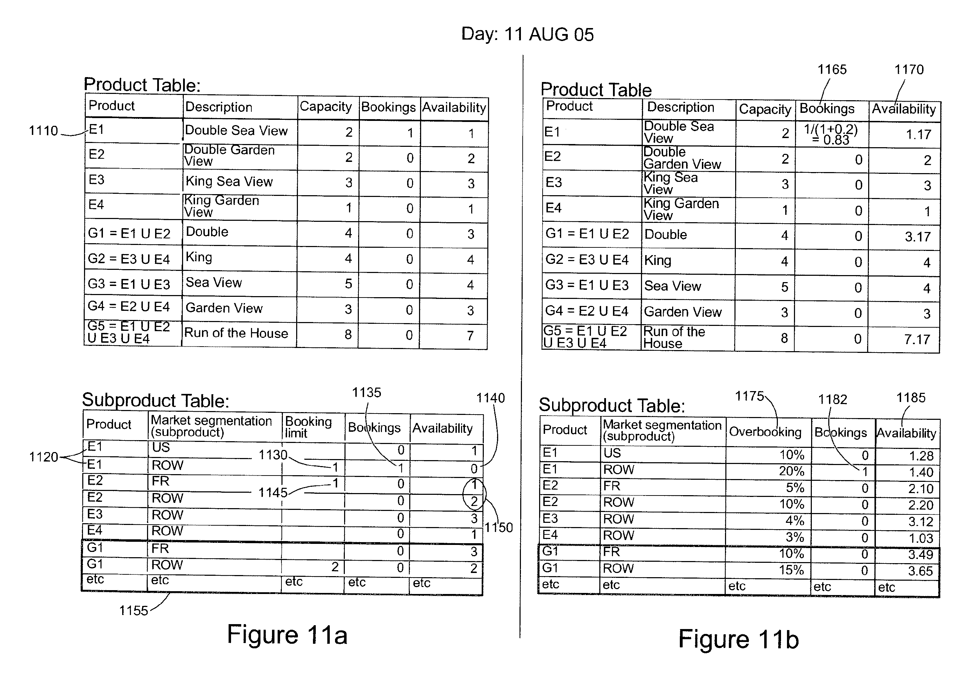

In the example chosen to illustrate the invention, i.e., hotel rooms, the quantum of time to sell an inventory item is the day (480). A room is on sale generally for each day of the year. Availability (440) is what is left after customer bookings (435) are removed from capacity (possibly taking into consideration overbooking discussed in FIG. 11). Applying the invention to another type of activity may lead to adoption of another time quantum. Hence, there is one inventory table per quantum of time and there are as many tables as necessary to match the longest permitted reservation period. Depending on hotel practices up to several years of reservation may have to be managed.

As far as availability is concerned (440), if on a particular day (480), a customer books a room pertaining to a group, e.g., customer wants a double bed room (450), then availability of corresponding group (g1) is going to be decremented by 1 for that day. The meta-groups to which group g1 participates, here the global meta-group (421) and all the other meta-groups shown have their availability decremented too.

The second example corresponds to the case where a customer uses all available criterions to formulate a request. Clearly, this requires booking in an element, the other type of saleable product, e.g., a non-smoking double room with sea-view (460). In this case element availability itself and groups and meta-groups to which element participates have availability decremented. The example assumes that booking of group g1 is followed by booking of element E2 so that the availability column is updated in the order as shown, from left to right.

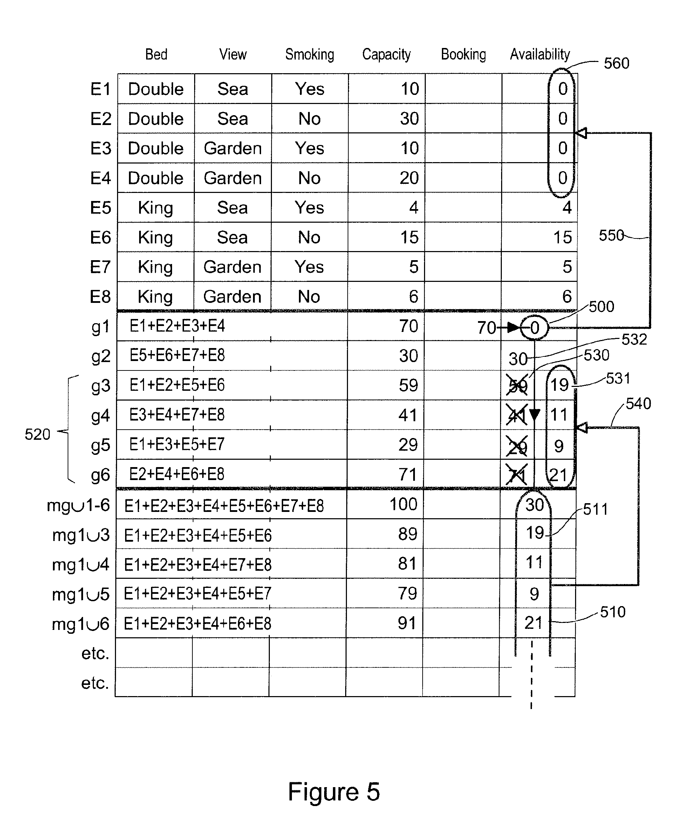

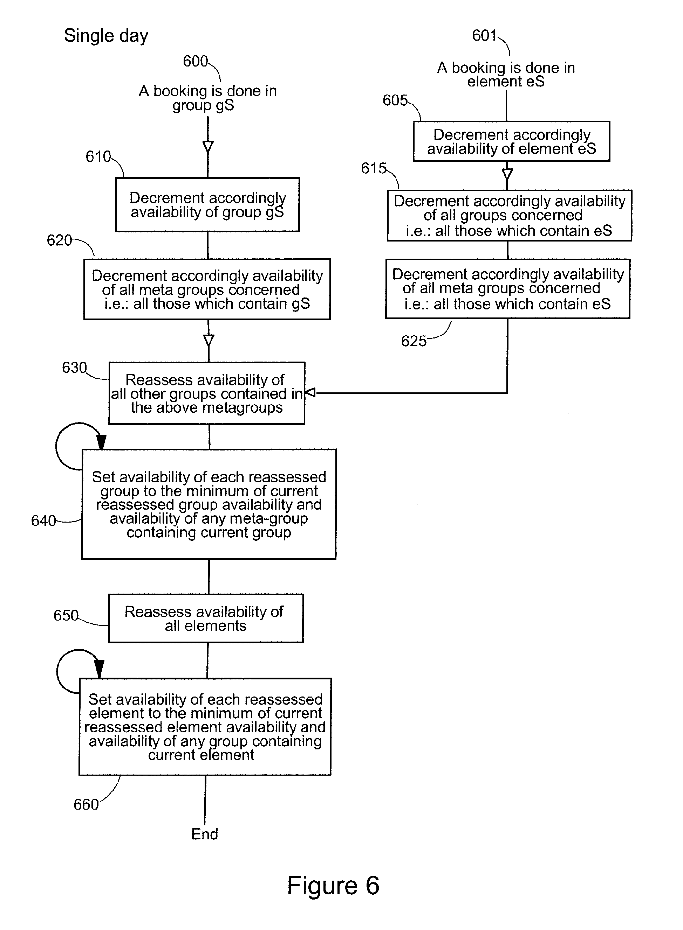

As it is further discussed in FIG. 5 and FIG. 6 the overlapping groups are not the only groups that are decremented: All the other groups that belong to the meta-groups including the group in which the sale was done, have their availability recalculated. Finally all the elements that belong to the reassessed groups have their availability recalculated.

FIG. 5 illustrates a boundary case to better explain the importance of meta-groups while booking the inventory of items. For example, if the 70 double rooms of group g1 (500) are all sold on a certain inventory day, the availabilities of all meta-groups that include g1, as explained in FIG. 4, have to be decremented by 70 so that the resulting availability is as shown (510). However, the availability figures of other groups (520) have not yet been changed since no bookings are assumed to have occurred in those groups, thus still offering the apparent opportunity of selling, e.g., the 59 rooms (530) of group g3 (sea-view). This is wrong since all sea-view double rooms have already been sold. Hence, after each booking, availability of groups (520) are reassessed. This is done (540) on the basis of the updated meta-group availabilities (510). The availability figures of groups may not be higher than the availability figures of the meta-groups to which they participate. In the example of FIG. 5, g3 to g6 groups are thus updated. The availabilities associated to the groups g3 to g6 are replaced by the ones of the corresponding meta-groups because they are lower. Hence, availability of g3 that was 59 becomes 19 (531) even though no selling of g3 has occurred. This corresponds to the elements left with a sea-view (E5+E6).

What has just been done from meta-groups to update group availabilities (540) is also done from groups where availability has been recalculated towards each element belonging to these groups (550). For the same reasons as mentioned above element availability (560) may not be higher than the ones of groups to which it participates. Hence, the availability of elements E1 to E4 are set to 0 since availability of double room group has fallen to zero (500).

The flow chart of FIG. 6 summarizes what is to be done to recalculate the availability of elements, groups and meta-groups in inventory tables after each booking in a group (600) on a single day. The availability of group in which a booking has been done is decremented accordingly (610). This triggers in turn the decrementing of availability figures in all meta-groups concerned, i.e., all those that contain the group gS in which the booking has been done (620). Then, availability of all other concerned groups are individually reassessed even though no booking in these groups has been done directly (630). Availability of each reassessed group is set to the minimum value found in any of the meta-groups where reassessed group appears (640) if indeed lower than the current group availability.

In the example of FIG. 5, among the meta-groups shown, it is worth noting here that g3 group appears in meta-group mg1∪3 where availability has become 19 (511). This is this latter value which is retained to become the new availability of group g3 (531) because it is lower than the current group availability. The same remark applies for the other groups.

Next step (650) of the flow chart in FIG. 6 consists in reassessing also the availabilities of all elements. Like in step (640) the element availabilities are then set (660) to the minimum value of the groups in which they appear if indeed lower than the current element availability. This ends the process of reassessing availabilities of all elements, groups and meta-groups.

When, instead of booking in a group, a booking is done in an element (601) the availability of element eS in which booking is done is decremented accordingly (605). Then, availability of all concerned groups and meta-groups, i.e., all groups and meta-groups that contain eS are decremented too (615, 625). After which, availability of all other groups and elements are reassessed like when booking in a group. Hence, all steps (630) to (660) are executed.

Obviously, cancellations have to be processed too. The processing is identical to the one shown in figures 4 and 5. The booking count is decremented instead of being incremented, and the availability is incremented instead of being decremented. The overall process described is not otherwise modified.

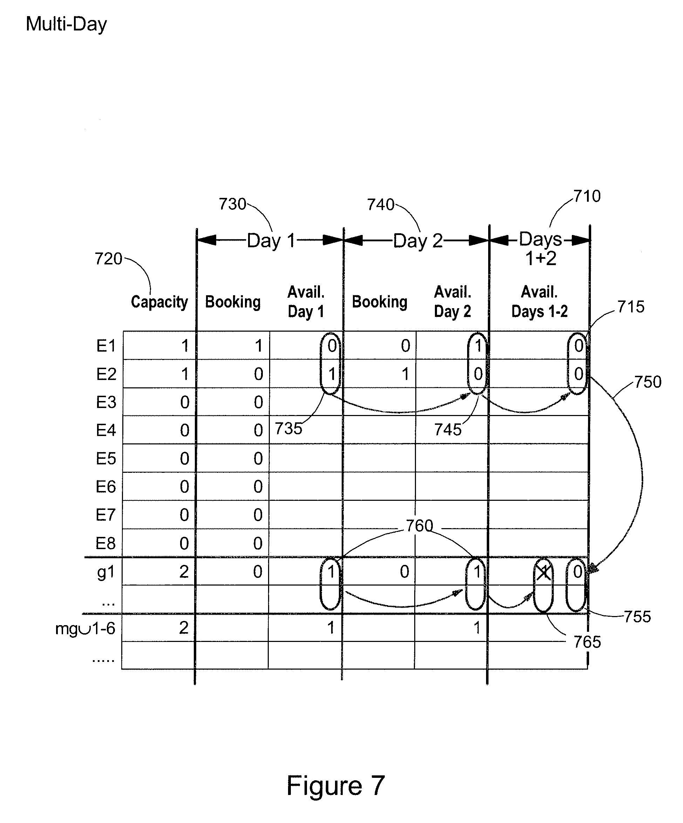

Up to this point it has been assumed that bookings are done for a single quantum of time (i.e., on a single day in the hotel industry). This is not a general assumption though and booking over any number of consecutive days may be supported. Figures 7 to 9 discuss from examples the problem of reassessing the availability figures over a period of two consecutive days. Yet very simple the examples could be extended to any number of consecutive days without any lack of generality.

The notions of time quantum and multi-day booking, according to what has been discussed so far, when applied to industries like airlines, may be interpreted. In airline industry it would make no sense in general to book a flight for several consecutive days. However, the principle of booking over several consecutive days is applicable to the difficult problem of booking a traveler for the successive segments of a flight which does one or more stops-over before reaching its final destination. Because some passengers disembark and new passengers get in at intermediate stops the management of the inventory of items for sale (i.e., plane seats in this case) is similar to the booking of hotel rooms over several days. The quantum of time may be translated into the concept of travel segments that have to be booked to complete a trip from origin to destination. Although figures 7 to 9 specifically refer to hotel rooms and days this may be interpreted in a more general way as suggested above.

FIG. 7 illustrates, through a first boundary case, how group availabilities are reassessed prior to a multi-day booking. The example, over a period of 2 days (710), assumes there are only two rooms left for booking, one E1 room and one E2 room; hence, capacity is as shown (720). Then, if during day 1 (730) E1 item is booked, availability of E1 for that day becomes zero while E2 availability remains at one (735). If the opposite occurs the next day, i.e., E2 item is booked instead of E1, availabilities figures are switched (745). Then, overall availability for the two-day period becomes zero (715), both for E1 and E2, since the minimum of availability falls to zero in one or the other day of the considered two-day period.

If now considering for the sake of clarity only the first group to which E1 and E2 belong, e.g., g1 the availability for each day of the period is indeed as shown (760). However, the group availability for the two-day period cannot be one (765), as a customer booking for two days in the group would be obliged to change room. Hence the availability for the group is not the minimum observed for each day of the period, but is reassessed (750) in view of what was assessed in the elements themselves (715) so that the overall availability is correctly set to zero (755). For the period considered (710), the multi-day availabilities of groups (755) may not be higher than the sum of the multi-day availabilities of the elements included in the groups.

The example of FIG. 7 also illustrates why it is advantageous for the service provider to have customers booking in a group rather than in elements. If, in the two-day period, one g1 booking has been done for each day of the period (instead of booking an E1 element on the first day then an E2 element on the second day), the overall availability would have indeed stayed to one (765), thus one two-day booking in the group could have possibly been done contributing to increase hotel revenue.

In the light of what has just been discussed, FIG. 8 explains through an example how group availabilities are assessed over a contiguous period of days (800). Still using the same elements and groups as defined in FIG. 1 and followings, the example shows only for clarity the groups g1, g2 and g3 and their capacities (810). This can be obtained with element capacities shown above (815).

If, e.g., two rooms are booked in group g1 the first day (820), availability of that group becomes one (825). As explained previously in FIG. 4 and in FIG. 5 availabilities of concerned meta-groups are altered too. Availability of meta-group mg1 ∪3 thus becomes 3 (830). And, although booking is done in g1, availabilities of all the groups impacted by the chains of overlapping groups are reassessed too. Hence, for the reasons discussed before, availability of g3 may not be higher than the availability of meta-group mg1∪3. Consequently g3 availability is also set to 3 (835).

The same things occur on day 2 with a booking of two rooms in group g2 so that availabilities of g2 and g3 are altered in a similar way (840).

Although overall availability (807) of groups g1 and g2 for the 2-day period is indeed the minimum observed during the individual days, i.e., 1 (845) the availability of g3 cannot be however 3 (850). The correct figure can be calculated thanks to the availability of the concerned sub-groups (860). Subgroups have been defined in FIG. 3. They have a capacity attached (805). The availability of subgroups sg1∩3 and sg2∩3 (the only ones that need to be considered in this example) may not be higher than the availability of the groups from which they intersect, thus they are set to one for sg1∩3 for day 1 (865) and for sg2∩3 day 2 (870). The overall availability in sub-groups for the two-day period is then as shown (875), i.e., the minimum observed for each day of the period. As a consequence, as g3 group can be considered as the union of subgroups sg1∩3 and sg2∩3, the availability of g3 cannot be higher than the sum of these two subgroups' availabilities (875); thus it is finally set to 2 (880).

A cancellation is considered as a 'negative booking', and booking counts are thus decreased while corresponding availabilities are increased. The process described is not otherwise affected.

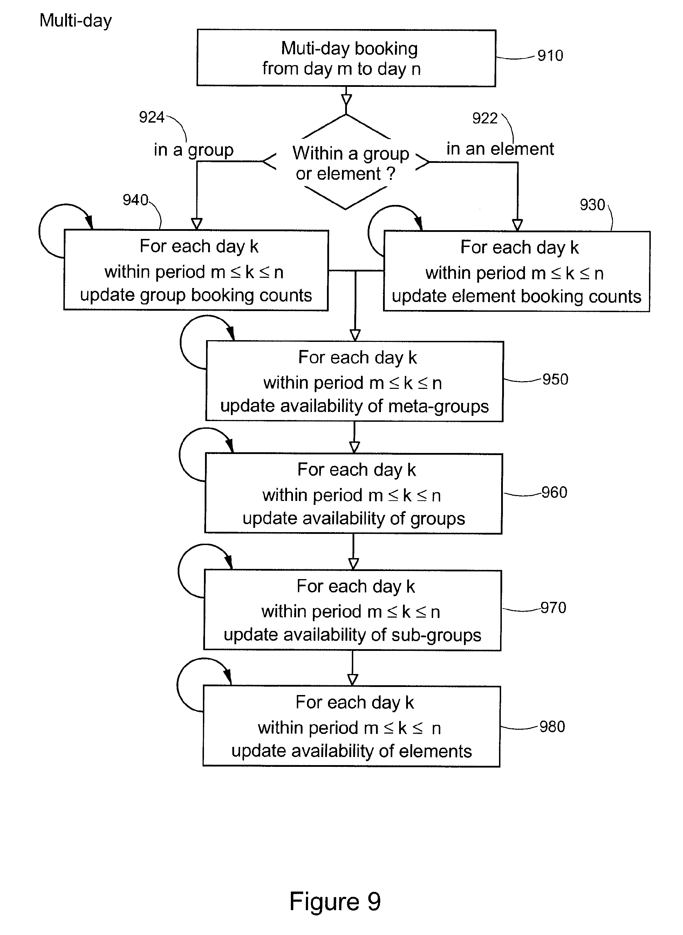

Finally, FIG. 9 summarizes what is to be done when a booking (or cancellation) encompasses a multi-day period of consecutive days (910). If bookings are done in an element (922) or in a group (924) the respective booking counts that were shown in FIG. 7 and in FIG. 8 are updated accordingly (930, 940) for each day of the period considered. Then, for each day of the period, availabilities of: meta-groups (950), groups (960), sub-groups (970) and elements (980) are exhaustively updated too.

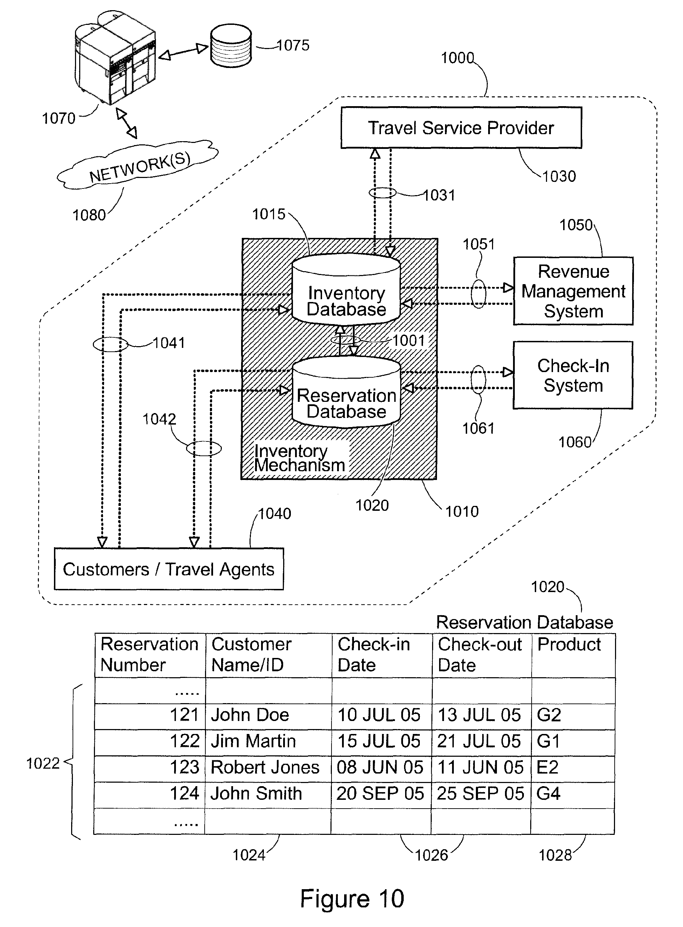

FIG. 10 describes an exemplary system (1000) that fully takes advantage of an inventory mechanism (1010).

Inventory mechanism comprises an inventory database (1015) organized and updated as explained in figures 2 to 9.

It also includes a reservation database (1020). In its most elementary form a reservation database (1020) is comprised of identified records (1022) listing customers (1024) that have booked, e.g., hotel rooms, with their check-in and check-out dates (1026) along with the products (1028), i.e., elements or groups as they were first defined by the owner or manager of the inventory.

As this was explained in previous figures the service provider (1030) has first to organize its inventory of items offered for sale during a setup phase, prior to the opening of the reservation, through transactions (1031) with the inventory database (1015). This may be done once and for all but the capacities may also be updated by the service provider to take care of all possible inventory modifications. The setup phase, on the basis of how elements and groups have been defined by the service provider, allows computing the group capacities, as well as the list of subgroups and meta-groups and their capacities. As this is further discussed in FIG. 11, booking limits are given by a revenue management system (1050) which has also access (1051) to the inventory database.

Once inventory database has been organized, customers, e.g., airline passengers or travelers, directly or through third-parties like travel agents (1040), can then perform bookings. To this end, customers or travel agents can interact with the inventory database (1015) issuing availability and booking requests and receiving responses (1041) on the actual availability of the products offered for sale. Reservation database is accessed (1042) to complete bookings if customer requests can indeed be satisfied, to cancel previous bookings, to consult the reservation status and/or to provide information such as names and customer ID's (addresses, corporate affiliations, phone numbers and so on). Inventory database and reservation database closely interact (1001) so that they are constantly updated to reflect the status of the inventory while reservations are done by customers and/or travel agents (1040) or when inventory database is modified by the service provider (1030) and/or controlled by the revenue management system (1050).

Finally, a check-in system (1060) interacts with the reservation database (1061) when the inventory item is actually delivered to the customer. Typically, this occurs when a traveler shows up in a hotel lobby on the first day of a reservation or checks in at an airline boarding counter in an airport. The booking in an element or a group previously done by the customer can be honored so that a particular room or seat, meeting the criterions of the element or group in which the booking was done, is actually attributed to the customer.

An inventory system is typically operated on one or more computers (1070) executing one or more programs. Computers have internal memories and have possibly access to large external storage means (1075) such as disk units holding databases. Computers are for example those of a central reservation system (CRS), i.e., the Amadeus system or any of several other computer systems allowing real-time access to airlines or hotel chains databases and offering the capability of booking reservations. Communications with the users of the system, i.e., customers, travel agents, travel service providers and the revenue management and check-in systems, are achieved through one or more networks (1080) to which computers are connected. Networks are generally run under the TCP/IP suite of protocols, i.e., the set of communication protocols that implement the protocol stack on which the Internet and most commercial networks are operated. The various parties and components involved exchange messages, e.g., XML (Extensible Markup Language) formatted messages to communicate.

FIG. 11 shows through two examples how inventory mechanism can be tailored to imbed revenue management practices previously discussed.

FIG. 11 a assumes that the service provider has decided to segment its offering, for some of the products offered for sale, into two types of market. Element E1 (1110) is for example split into a US market segment and a rest-of-the-world (ROW) market segment (1120). Hence, revenue management system can assign an individual booking limit, e.g., to the ROW segment (1130) so that if a booking occurs in this particular segment (1135) the corresponding segment availability (1140) will be lower than the actual availability of the product (in this particular example, 0 instead of 1).

Similarly, element E2 has been segmented into a French segment (FR) and a ROW segment with a booking limit of 1 attributed to the French segment (1145), in which case the respective availabilities are as shown (1150). Also, as explained in previous figures, availabilities in each group are reassessed as shown (1155) after each booking.

Second example is illustrated with FIG 11 b. On top of segmentation this second example assumes that overbooking (1175) is here given by the revenue management system. The level of overbooking can be set differently for each segment of a product. Each booking, for example a booking in the ROW segment of an E1 element (1182), is then weighted by the level of permitted overbooking so that the product booking counter (1165) is less than the subproduct booking counter. E1 booking counter and availability (1170) are computed as shown. As being now the result of calculations including multiplication and divisions, these values are generally no longer integer values. The overall availability is as shown (1185) and is rounded for display purposes.

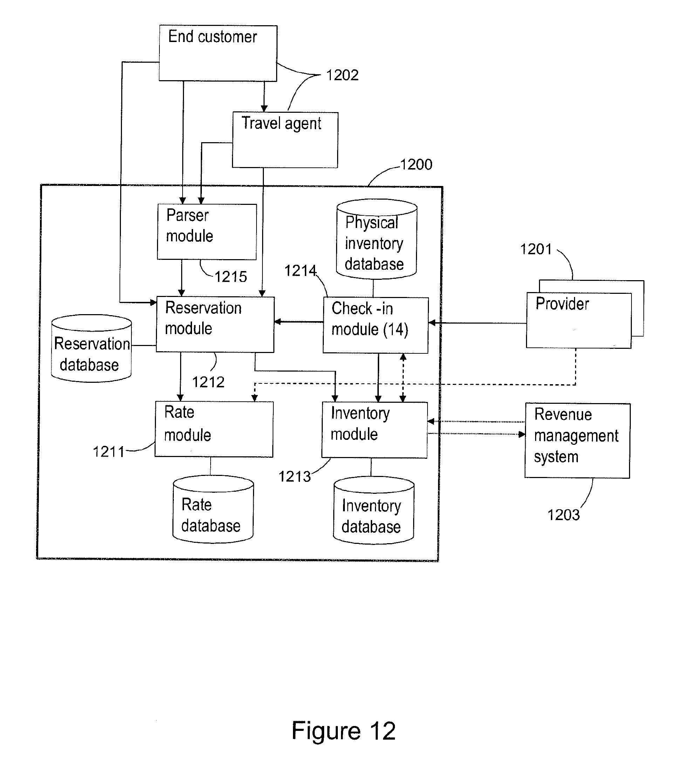

Following description, making references to Figures 12, 13, 14 and 15, further discusses in greater details the interactions of an inventory mechanism with a revenue management system (1203).

Revenue Management Systems (RMSs) are systems that generally follow three steps:

- Collect data.

- Use collected data to estimate demand and forecast other quantities such as cancellations and no-shows.

- Find the optimal set of controls (notably booking limits, bid price and overbooking percentage, further discussed here after). This is the optimization step.

On this, see for example: "The Theory and Practice of Revenue Management" by Kalyan T. Talluri and Garrett J. Van Ryzin Kluwer Academic Publishers ISBN 1-4020-7701-7 page 18.
The inventory module (1213):

- sends inventory snapshots to the revenue management system (RMS data collection),
- receives and uses the optimized set of controls generated by the revenue management system (1203) as described here after.

Snapshots:

The snapshot sent by the inventory module primarily contains activity data for a period of time, typically for one day, coming from the inventory table and the reservation table.
The snapshot may also contain definition data coming from:

- the element table,
- the group table, and
- the markets' definition (i.e., the subproduct table).

Controls:

The revenue management system sends controls per unit of time (typically per day) with the following data:

- product, market (i.e., subproduct), booking limit and/or protection level and/or overbooking percentage and/or bid price.

When it receives the above controls the inventory module (1213) updates the subproduct tables accordingly.
Sub-products are further defined as follows:
The inventory module (1213) allows defining sub-products. A sub-product here is a specialization of a product to serve a market segment. The inventory module allows associating constraints and rules to sub-products. Examples of constraints and rules are:

- booking limits;
- protection levels;
- overbooking rules;
- bid price.

Sub-products are usually defined and used in combination with a revenue management system as explained hereafter.

Sub-product definition implies identifying the end requester. The parser module (1215) analyzes the incoming request, identifies the end-requester market and calls the reservation module (1212). The reservation module sends availability requests to the inventory module (1213) formatted, for example, in XML (eXtended Mark-up Language):

```
<availability>
<market>mymarket</market>
<number>1</number>
<stay begin="20050728" end="20050802"/>
<product name="G1" />
</availability>
```

The processing of overbooking rules, booking limits, and bid price are now detailed. It should be understood that the present invention is not limited to said rules and constraints and can also handle other constraints and rules.

Overbooking definition is as follows.

It is possible to assign an overbooking percentage to sub-products.

Then, the sold products (i.e., bookings) are calculated in the following way:

$$\text{bookings (product)} = \sum_{\text{sub-product} \subset \text{product}} \text{bookings(sub-product)} / (1 + \text{overbooking\_percentage (sub-product)} / 100)$$

The inventory module preferably uses two tables:

1. a product table as discussed above whose input-key comprises the product identifier and the date, and data comprise the capacity, and the product's booking counter and availability;
2. a subproduct table whose input-key comprises the product identifier, the date and the market segment, and data comprise the overbooking percentage, and the sub-product's booking counter and availability.

Then, the availability of a sub-product is calculated as follows:

$$\text{availability (sub-product)} = \text{availability(product)} * (1 + \text{overbooking\_percentage (sub-product)} / 100)$$

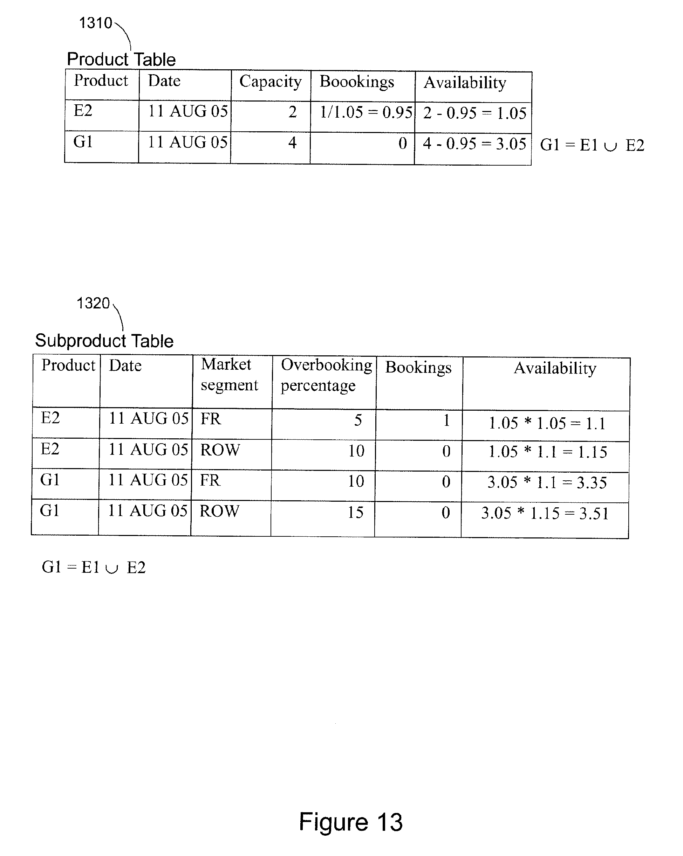

Figure 13 depicts examples of product (1310) and subproduct tables (1320) in the hotel industry.

Two markets are defined FR (France) and ROW (Rest Of the World). An overbooking percentage is defined for all sub-products.

A French customer booked an E2 room on August 11th 2005.

The overbooking percentage for E2 on the French market is 5%.

So E2 booking = booking (1 room) /1.05 = 0.95.

Because there are two E2 items the E2 availability is 2 - 0.95 = 1.05.

E2 is an element of the G1 group that contains four items. Therefore the G1 availability is 4 - 0.95 = 3.05.

The availability of E2 and G1 sub-products depends on their overbooking percentage:

| Product | Market | Overbooking percentage | Availability |
|---------|--------|------------------------|--------------|
| E2 | French | 5 | 1.05 * 1.05 = 1.1 |
| E2 | Rest of the world | 10 | 1.05 * 1.1 = 1.15 |
| G1 | French | 10 | 3.05 * 1.1 = 3.35 |

(continued)

| Product | Market | Overbooking percentage | Availability |
|---------|--------|------------------------|--------------|
| G1 | Rest of the world | 15 | 3.05 * 1.15 = 3.51 |

- The availability calculation described above can be reused without changes to calculate the product availability thanks to the product booking counter, in the product table. The difference between the sum of subproduct bookings, and the product bookings, gives the maximum number of denied assignments (denied-boardings in the airline industry), if all customers that have booked eventually show up.

Booking limits are as followed.
A booking limit is a maximum number of bookings allowed in a given market segment regardless of the actual availability of the product.
The inventory preferably uses two tables:

1. a product table as shown above whose input-key comprises the product identifier and the date, and data comprise the capacity, and the product's booking counter and availability;
2. a subproduct table whose input-key comprises the product identifier, the date and the market segment and data comprise the booking limit, and the sub-product's booking counter and availability.

The product bookings is the sum of the sells of the sub-products of said product, possibly weighted by overbooking as explained in the previous section. The availability of a sub-product is calculated as follows:

$$\text{availability(sub-product)} = \min(\text{availability (product)}, \text{booking\_limit(sub-product)} - \text{bookings(sub-product)}$$

The product bookings follow from the sub-product bookings Then the availability calculation shown above can be reused without changes to calculate the product availability from the product booking counter. Eventually the subproduct availability follows from the product availability.

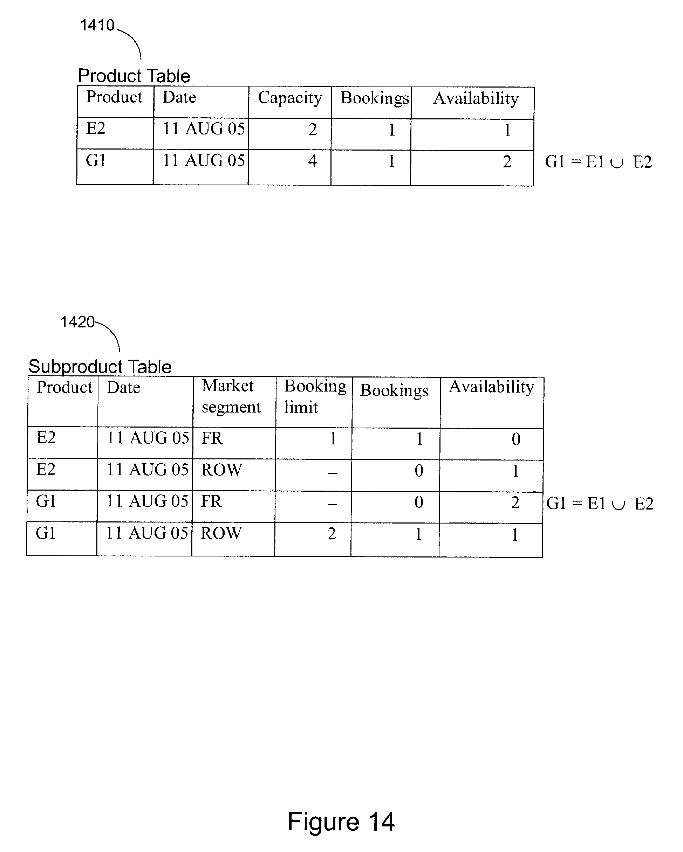

Figure 14 depicts examples of product (1410) and subproduct (1420) tables in the hotel industry. Two markets are defined, FR (France) and ROW (Rest Of the World). We assume that all overbooking percentages are set to zero.
A booking limit is set to 1 for element E2 and for the French market.
A French customer booked an E2 room on August 11th 2005.
A subsequent French customer who would also like to book an E2 room on August 11th 2005 will be returned no room available although an E2 room is still available.
A booking limit is also defined for group G1 and for the rest of the world market.
A French customer from the rest of the world booked a G1 room on August 11th 2005.
Because there is no booking limits for French bookings in group G1 the availability for the French market in group G1 is the same as the G1 availability, 2.
Because there is a booking limit for rest of the world bookings in group G1 the availability for the rest of the world market in group G1 is the booking limit on said rest of the world market minus the number of sells in said rest of the world market, 1.
Bid prices are defined as follows.
The bid price is used by the following rule

```
if the product rate >= bid price and inventory item available
        return available
else
        return not available
```

Bid price implementation implies that the system knows the product rate. The reservation module (1212) gets this piece of information from the rate module (1211) and sends availability requests to the inventory module (1213), for example, in following XML format:

```
<availability>
<market>mymarket</market>
<rate>105</rate>
<number>1</number>
```

```
<stay begin="20050728" end="20050802"/>
<product name="G1" />
</availability>
```

The inventory preferably uses two tables:

1. a product table as shown above, whose input-key comprises the product identifier and the date, and data comprise the capacity, and the product's booking counter and availability;
2. a subproduct table, whose input-key comprises the product identifier, the date and the market segment, and data comprise the bid price.

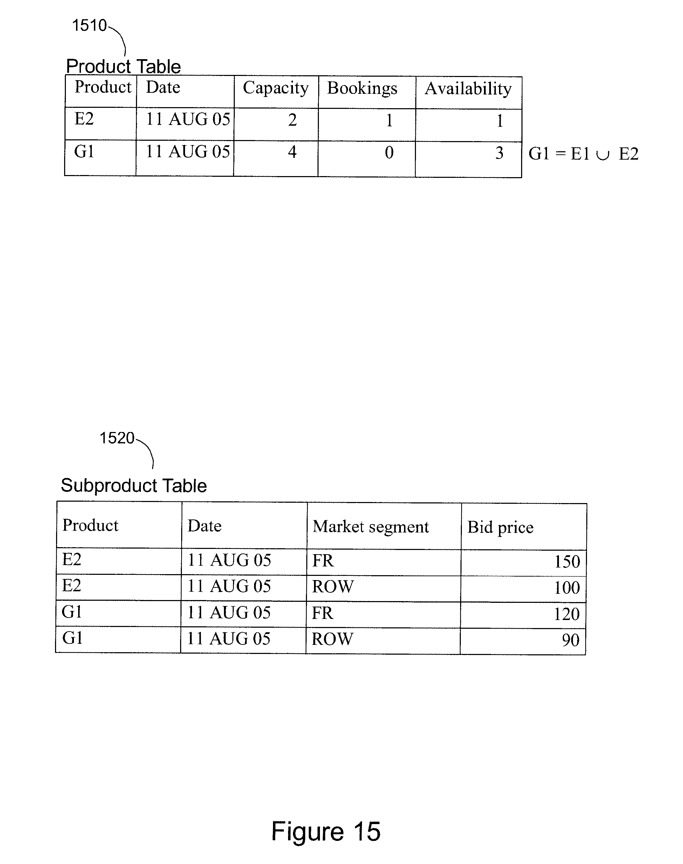

Figure 15 depicts examples of product (1510) and subproduct (1520) tables in the hotel. Because the booking and availability counters are kept in the product table the availability calculation described above can be reused without changes.
Two markets are defined, FR (France) and ROW (Rest Of the World).
For group G1 a bid price of 120 is set for French customers and a bid price of 90 is set for the rest of the world customers.
If the reservation module queries a G1 availability for a rate of 100 the inventory module will return available (100 > 90) if the requester was from the rest of the world and not available (100 < 120) if the requester was French.
It is noted that the foregoing examples have been provided merely for the purpose of explanation and are in no way to be construed as limiting of the present invention. While the present invention has been described with reference to certain embodiments, it is understood that the words which have been used herein are words of description and illustration, rather than words of limitation. Changes may be made, within the purview of the appended claims, as presently stated and as amended, without departing from the scope and spirit of the present invention in its aspects. Although the present invention has been described herein with reference to particular means, materials and embodiments, the present invention is not intended to be limited to the particulars disclosed herein; rather, the present invention extends to all functionally equivalent structures, methods and uses, such as are within the scope of the appended claims.

**Claims**

1.   A method of managing an inventory of service resources (130) offered for sale by a service provider, said method comprising:

defining a plurality of criterions (105, 110, 115) to characterize said service resources;
dividing said inventory of service resources into a plurality of elements (100) on the basis of said plurality of criterions, each element (101) comprising an exclusive subset of said service resources (121), each said exclusive subset comprising resources sharing common criterion values;
creating a plurality of groups (141, 146) aggregating those of said elements having at least one criterion value in common;
offering for sale said plurality of elements and said plurality of groups.

2.   The method of claim 1 wherein each element of said plurality of elements belongs to more than one group (347) of said plurality of groups.

3.   The method of claim 1 or 2 further comprising:

computing all meta-groups (420) of said elements that can be formed by the union of at least two overlapping groups of said plurality of groups.

4. The method of claim 3 including the further step of:

   retaining those of said meta-groups forming a unique combination of said elements from a largest combination of said groups (421).

5. The method according to any one of the previous claims including the further step of:

   computing a capacity (430) for each created group (410) and for each computed meta-group (420) from capacities of said plurality of elements (400).

6. The method according to any one of the previous claims including the step of:

   booking (601) in one of said elements, said booking step including the further steps of:

   computing an availability of said one element (605);
   computing an availability of each group (615) and of each meta-group (625) containing said one element.

7. The method according to claim 6 wherein the step of booking in one of said elements is replaced by the step of:

   booking (600) in one of said groups, said booking step including the further steps of:

   computing the availability of said one group (610);
   computing the availability of each meta-group containing said one group (620).

8. The method according to claim 7 including the further steps of:

   reassessing availability of all other groups (630); said reassessing step including the further step (640) of: setting reassessed group availability to the minimum of current reassessed group availability and availability of any meta-group containing current group;
   reassessing availability of all elements (650); said reassessing step including the further step (660) of: setting reassessed element availability to the minimum of current reassessed element availability, and availability of any group containing current element.

9. The method according to claim 1 wherein said service resources are leisure service resources.

10. The method according to claim 1 wherein said service resources are travel service resources.

11. The method according to claim 10 wherein a specific item of said inventory of travel service resources is attributed at check-in.

12. The method according to claims 10 or 11 wherein said travel service resources are hotel rooms.

13. The method according to claims 10 or 11 wherein said travel service resources are seats in an airplane.

14. The method according to claims 9 to 12 wherein element and group availabilities are assessed over a multi-day booking period (710) comprising the preliminary steps of:

    computing all sub-groups (350) of said elements that can be formed by the intersection of two overlapping groups of said plurality of groups;
    computing a capacity (860) for each said subgroup.

15. The method according to claim 14 wherein a booking is done over said multi-day booking period (910), comprising the further exclusive steps of:

    either booking in one of said elements (922), said booking step including the further step (930) of updating element booking counts for each day of said multi-day booking period;
or booking in one of said groups (924), said booking step including the further step (940) of updating group booking counts for each day of said multi-day booking period.

16. The method according to claim 15 comprising, for each day of said multi-day period, the further steps of:

updating availability values of said meta-groups (950);
updating availability values of said groups (960);
updating availability values of said sub-groups (970);
updating availability values of said elements (980).

17. The method according to claims 14 to 16 wherein availability values (807) of said elements, of said groups and of said sub-groups, over said multi-day booking period, are assessed on the basis of the minimum availability value found in any day of said multi-day booking period (800).

18. The method according to claim 17 wherein subgroup availability values, over said multi-day booking period, are reassessed on the basis of element availability values over said multi-day booking period.

19. The method according to claim 17 wherein group availability values over said multi-day booking period are reassessed on the basis of sub-group and element availability values over said multi-day booking period (875).

20. A system, in particular an inventory mechanism (1010), comprising means adapted for carrying out each step of the method according to any one of the claims 1 to 19.

21. The system of claim 20 wherein said inventory mechanism includes an inventory database (1015) and a reservation database (1020).

22. The system of claims 20 or 21 comprising means adapted for interfacing with: a travel service provider (1030); customers and/or travel agents (1040); a revenue management system (1050); a check-in system (1060).

23. The system of claim 22 further including a check-in module (1214), a parser module (1215), an inventory module (1213) and a rate module (1211).

24. A global travel processing system (1000) for booking travel service resources offered for sale by a travel service provider (1030) to customers (1040), comprising:

an inventory mechanism for managing the inventory of said travel service resources (1010);
a revenue management system (1050) for maximizing revenue withdrawn from the sale of said travel resources;
a check-in system (1060) for attributing said travel resources to said customers.

25. The system of claim 24 wherein said inventory mechanism (1010) has means adapted for implementing revenue management techniques, including:

means for defining sub-products (1120) within the inventory of said travel resources;
means for setting a level of overbooking (1175) to any item within the inventory of said travel resources including said sub-products;
means for setting booking limits (1145) to any item within the inventory of said travel resources including said sub-products;
means for setting bid prices (1520) to any item within the inventory of said travel resources including said sub-products.

26. The system of claim 25 wherein said adapted means are triggered through instructions (1051) received from said revenue management system.

27. A computer program product stored on a computer readable storage medium, comprising computer readable code means for causing at least one computer (1070) to operate the method of managing an inventory of service resources according to any one of the claims 1 to 19.

Figure 1

Figure 2

Figure 3

Inventory day : January 1rst, 2006 — 480

| | | Bed | View | Smoking | Capacity | Booking | Availability | |
|---|---|---|---|---|---|---|---|---|
| 400 | E1 | Double | Sea | Yes | 10 | | | |
| | E2 | Double | Sea | No | 30 | 1 →→ 29 | | 460 |
| | E3 | Double | Garden | Yes | 10 | | | |
| | E4 | Double | Garden | No | 20 | | | |
| | E5 | King | Sea | Yes | 4 | | | |
| | E6 | King | Sea | No | 15 | | | |
| | E7 | King | Garden | Yes | 5 | | | |
| | E8 | King | Garden | No | 6 | | | 450 |
| 410 | g1 | E1+E2+E3+E4 | | | 70 | 1 →→ 69 | 68 | |
| | g2 | E5+E6+E7+E8 | | | 30 | | | |
| | g3 | E1+E2+E5+E6 | | | 59 | | 58 | |
| | g4 | E3+E4+E7+E8 | | | 41 | | | |
| | g5 | E1+E3+E5+E7 | | | 29 | | | |
| 421 | g6 | E2+E4+E6+E8 | | | 71 | | 70 | |
| 420 | mg∪1-6 | E1+E2+E3+E4+E5+E6+E7+E8 | | | 100 | | 99 98 | |
| | mg1∪3 | E1+E2+E3+E4+E5+E6 | | | 89 | | 88 87 | |
| | mg1∪4 | E1+E2+E3+E4+E7+E8 | | | 81 | | 80 79 | |
| | mg1∪5 | E1+E2+E3+E4+E5+E7 | | | 79 | | 78 77 | |
| | mg1∪6 | E1+E2+E3+E4+E6+E8 | | | 91 | | 90 89 | |
| | etc. | | | | | | | |
| | etc. | | | | | | | |

430  435  440

Figure 4

18

| | Bed | View | Smoking | Capacity | Booking | Availability | |
|---|---|---|---|---|---|---|---|
| E1 | Double | Sea | Yes | 10 | | 0 | 560 |
| E2 | Double | Sea | No | 30 | | 0 | |
| E3 | Double | Garden | Yes | 10 | | 0 | |
| E4 | Double | Garden | No | 20 | | 0 | |
| E5 | King | Sea | Yes | 4 | | 4 | |
| E6 | King | Sea | No | 15 | | 15 | 550 |
| E7 | King | Garden | Yes | 5 | | 5 | |
| E8 | King | Garden | No | 6 | | 6 | 500 |
| g1 | E1+E2+E3+E4 | | | 70 | 70→ 0 | | |
| g2 | E5+E6+E7+E8 | | | 30 | 30 | | 532, 530 |
| g3 | E1+E2+E5+E6 | | | 59 | 5̶0̶ | 19 | 531 |
| g4 | E3+E4+E7+E8 | | | 41 | 4̶1̶ | 11 | 540 |
| g5 | E1+E3+E5+E7 | | | 29 | 2̶9̶ | 9 | |
| g6 | E2+E4+E6+E8 | | | 71 | 7̶1̶ | 21 | |
| mg∪1-6 | E1+E2+E3+E4+E5+E6+E7+E8 | | | 100 | | 30 | 511 |
| mg1∪3 | E1+E2+E3+E4+E5+E6 | | | 89 | | 19 | |
| mg1∪4 | E1+E2+E3+E4+E7+E8 | | | 81 | | 11 | |
| mg1∪5 | E1+E2+E3+E4+E5+E7 | | | 79 | | 9 | |
| mg1∪6 | E1+E2+E3+E4+E6+E8 | | | 91 | | 21 | 510 |
| etc. | | | | | | | |
| etc. | | | | | | | |

520

Figure 5

Single day

600
A booking is done in
group gS

601
A booking is done in
element eS

605
Decrement accordingly
availability of element eS

610
Decrement accordingly
availability of group gS

615
Decrement accordingly availability
of all groups concerned
i.e.: all those which contain eS

620
Decrement accordingly availability
of all meta groups concerned
i.e.: all those which contain gS

Decrement accordingly availability
of all meta groups concerned
i.e.: all those which contain eS

625

630
Reassess availability of
all other groups contained in
the above metagroups

640
Set availability of each reassessed
group to the minimum of current
reassessed group availability and
availability of any meta-group
containing current group

650
Reassess availability of
all elements

660
Set availability of each reassessed
element to the minimum of current
reassessed element availability and
availability of any group containing
current element

End

Figure 6

Multi-Day

| | Capacity | Booking | Avail. Day 1 | Booking | Avail. Day 2 | Avail. Days 1-2 | |
|---|---|---|---|---|---|---|---|
| E1 | 1 | 1 | 0 | 0 | 1 | 0 | |
| E2 | 1 | 0 | 1 | 1 | 0 | 0 | |
| E3 | 0 | 0 | | | | | |
| E4 | 0 | 0 | | | | | |
| E5 | 0 | 0 | | | | | |
| E6 | 0 | 0 | | | | | |
| E7 | 0 | 0 | | | | | |
| E8 | 0 | 0 | | | | | |
| g1 | 2 | 0 | 1 | 0 | 1 | X  0 | |
| ... | | | | | | | |
| mg∪1-6 | 2 | | 1 | | 1 | | |
| ..... | | | | | | | |

Figure 7

Multi-Day

<table>
<tr><th></th><th>Capacity</th><th colspan="2">◄── Day 1 ──►</th><th colspan="2">◄── Day 2 ──►</th><th>◄─ Days 1-2 ─►</th></tr>
<tr><th>805</th><th>Capacity</th><th>Booking</th><th>Avail. Day 1</th><th>Booking</th><th>Avail. Day 2</th><th>Avail. Days 1-2 807</th></tr>
<tr><td>E1</td><td>0</td><td></td><td></td><td></td><td></td><td></td></tr>
<tr><td>E2</td><td>2</td><td></td><td>1</td><td></td><td>2</td><td>1</td></tr>
<tr><td>E3</td><td>1</td><td></td><td>1</td><td></td><td>1</td><td>1</td></tr>
<tr><td>E4</td><td>0</td><td>815</td><td></td><td></td><td></td><td></td></tr>
<tr><td>E5</td><td>1</td><td></td><td>1</td><td></td><td>1</td><td>1</td></tr>
<tr><td>E6</td><td>1</td><td></td><td>1</td><td></td><td>1</td><td>1</td></tr>
<tr><td>E7</td><td>1</td><td></td><td>1</td><td></td><td>1</td><td>1</td></tr>
<tr><td>E8</td><td>0</td><td>820</td><td>825</td><td></td><td></td><td></td></tr>
<tr><td>g1</td><td>3</td><td>2</td><td>1</td><td></td><td>3</td><td>1</td></tr>
<tr><td>g2</td><td>3</td><td></td><td>3</td><td>2</td><td>1</td><td>1</td></tr>
<tr><td>g3</td><td>4</td><td></td><td>3</td><td></td><td>3</td><td>✗ ②  850</td></tr>
<tr><td>....</td><td></td><td></td><td></td><td></td><td></td><td></td></tr>
<tr><td>mg1∪3</td><td>5</td><td>830</td><td>3</td><td></td><td>5</td><td></td></tr>
<tr><td>mg2∪3</td><td>5</td><td></td><td>5</td><td>835</td><td>3</td><td>880</td></tr>
<tr><td>.....</td><td></td><td></td><td></td><td></td><td>840</td><td></td></tr>
<tr><td>sg1∩3</td><td>2</td><td></td><td>1 865</td><td></td><td>2</td><td>1</td></tr>
<tr><td>sg2∩3</td><td>2</td><td></td><td>2</td><td>870</td><td>1</td><td>1 875</td></tr>
<tr><td>.....</td><td></td><td></td><td></td><td></td><td></td><td></td></tr>
</table>

800

845

810

860

Figure 8

Multi-day

```
                    ┌─────────────────────────┐
                    │     Muti-day booking     │───910
                    │   from day m to day n    │
                    └─────────────────────────┘
                                 │
                                 ▽
     924                    ╱─────────╲                922
      │                    ╱  Within a  ╲                │
  in a group  ◁───────────⟨   group      ⟩───────────▷ in an element
                           ╲  or element ? ╱
                            ╲─────────────╱
```

```
 940                                                          930
  │                                                            │
┌─────────────────────────┐              ┌─────────────────────────┐
│     For each day k        │              │     For each day k        │
│  within period m ≤ k ≤ n  │              │  within period m ≤ k ≤ n  │
│ update group booking counts│             │update element booking counts│
└─────────────────────────┘              └─────────────────────────┘
```

```
        ┌─────────────────────────┐
        │     For each day k        │
        │  within period m ≤ k ≤ n  │───950
        │ update availability of meta-groups│
        └─────────────────────────┘

        ┌─────────────────────────┐
        │     For each day k        │
        │  within period m ≤ k ≤ n  │───960
        │  update availability of groups │
        └─────────────────────────┘

        ┌─────────────────────────┐
        │     For each day k        │
        │  within period m ≤ k ≤ n  │───970
        │update availability of sub-groups│
        └─────────────────────────┘

        ┌─────────────────────────┐
        │     For each day k        │
        │  within period m ≤ k ≤ n  │───980
        │ update availability of elements│
        └─────────────────────────┘
```

Figure 9

Figure 10

| Reservation Number | Customer Name/ID | Check-in Date | Check-out Date | Product |
|---|---|---|---|---|
| ..... | | | | |
| 121 | John Doe | 10 JUL 05 | 13 JUL 05 | G2 |
| 122 | Jim Martin | 15 JUL 05 | 21 JUL 05 | G1 |
| 123 | Robert Jones | 08 JUN 05 | 11 JUN 05 | E2 |
| 124 | John Smith | 20 SEP 05 | 25 SEP 05 | G4 |
| ..... | | | | |

## Figure 11a

Product Table:

| Product | Description | Capacity | Bookings | Availability |
|---|---|---|---|---|
| E1 | Double Sea View | 2 | 1 | 1 |
| E2 | Double Garden View | 2 | 0 | 2 |
| E3 | King Sea View | 3 | 0 | 3 |
| E4 | King Garden View | 1 | 0 | 1 |
| G1 = E1 U E2 | Double | 4 | 0 | 3 |
| G2 = E3 U E4 | King | 4 | 0 | 4 |
| G3 = E1 U E3 | Sea View | 5 | 0 | 4 |
| G4 = E2 U E4 | Garden View | 3 | 0 | 3 |
| G5 = E1 U E2 U E3 U E4 | Run of the House | 8 | 0 | 7 |

Subproduct Table:

| Product | Market segmentation (subproduct) | Booking limit | Bookings | Availability |
|---|---|---|---|---|
| E1 | US | | 0 | 1 |
| E1 | ROW | 1 | 1 | 0 |
| E2 | FR | 1 | 0 | 1 |
| E2 | ROW | | 0 | 2 |
| E3 | ROW | | 0 | 3 |
| E4 | ROW | | 0 | 1 |
| G1 | FR | | 0 | 3 |
| G1 | ROW | 2 | 0 | 2 |
| etc | etc | etc | etc | etc |

Figure 11a

## Figure 11b

Product Table

| Product | Description | Capacity | Bookings | Availability |
|---|---|---|---|---|
| E1 | Double Sea View | 2 | $1/(1+0.2)$ $= 0.83$ | 1.17 |
| E2 | Double Garden View | 2 | 0 | 2 |
| E3 | King Sea View | 3 | 0 | 3 |
| E4 | King Garden View | 1 | 0 | 1 |
| G1 = E1 U E2 | Double | 4 | 0 | 3.17 |
| G2 = E3 U E4 | King | 4 | 0 | 4 |
| G3 = E1 U E3 | Sea View | 5 | 0 | 4 |
| G4 = E2 U E4 | Garden View | 3 | 0 | 3 |
| G5 = E1 U E2 U E3 U E4 | Run of the House | 8 | 0 | 7.17 |

Subproduct Table:

| Product | Market segmentation (subproduct) | Overbooking | Bookings | Availability |
|---|---|---|---|---|
| E1 | US | 10% | 0 | 1.28 |
| E1 | ROW | 20% | 1 | 1.40 |
| E2 | FR | 5% | 0 | 2.10 |
| E2 | ROW | 10% | 0 | 2.20 |
| E3 | ROW | 4% | 0 | 3.12 |
| E4 | ROW | 3% | 0 | 1.03 |
| G1 | FR | 10% | 0 | 3.49 |
| G1 | ROW | 15% | 0 | 3.65 |
| etc | etc | etc | etc | etc |

Figure 11b

EP 1 840 806 A1

Figure 12

1310

## Product Table

| Product | Date | Capacity | Boookings | Availability |
|---------|------|----------|-----------|--------------|
| E2 | 11 AUG 05 | 2 | $1/1.05 = 0.95$ | $2 - 0.95 = 1.05$ |
| G1 | 11 AUG 05 | 4 | 0 | $4 - 0.95 = 3.05$ |

$G1 = E1 \cup E2$

1320

## Subproduct Table

| Product | Date | Market segment | Overbooking percentage | Bookings | Availability |
|---------|------|----------------|------------------------|----------|--------------|
| E2 | 11 AUG 05 | FR | 5 | 1 | $1.05 * 1.05 = 1.1$ |
| E2 | 11 AUG 05 | ROW | 10 | 0 | $1.05 * 1.1 = 1.15$ |
| G1 | 11 AUG 05 | FR | 10 | 0 | $3.05 * 1.1 = 3.35$ |
| G1 | 11 AUG 05 | ROW | 15 | 0 | $3.05 * 1.15 = 3.51$ |

$G1 = E1 \cup E2$

# Figure 13

1410

Product Table

| Product | Date | Capacity | Bookings | Availability |
|---------|------|----------|----------|--------------|
| E2 | 11 AUG 05 | 2 | 1 | 1 |
| G1 | 11 AUG 05 | 4 | 1 | 2 |

$G1 = E1 \cup E2$

1420

Subproduct Table

| Product | Date | Market segment | Booking limit | Bookings | Availability |
|---------|------|----------------|---------------|----------|--------------|
| E2 | 11 AUG 05 | FR | 1 | 1 | 0 |
| E2 | 11 AUG 05 | ROW | – | 0 | 1 |
| G1 | 11 AUG 05 | FR | – | 0 | 2 |
| G1 | 11 AUG 05 | ROW | 2 | 1 | 1 |

$G1 = E1 \cup E2$

# Figure 14

1510

Product Table

| Product | Date | Capacity | Bookings | Availability |
|---------|------|----------|----------|--------------|
| E2 | 11 AUG 05 | 2 | 1 | 1 |
| G1 | 11 AUG 05 | 4 | 0 | 3 |

$G1 = E1 \cup E2$

1520

Subproduct Table

| Product | Date | Market segment | Bid price |
|---------|------|----------------|-----------|
| E2 | 11 AUG 05 | FR | 150 |
| E2 | 11 AUG 05 | ROW | 100 |
| G1 | 11 AUG 05 | FR | 120 |
| G1 | 11 AUG 05 | ROW | 90 |

# Figure 15

**European Patent Office**

**DECLARATION**

which under Rule 45 of the European Patent Convention shall be considered, for the purposes of subsequent proceedings, as the European search report

Application Number

EP 06 30 0290

| The Search Division considers that the present application, does not comply with the provisions of the EPC to such an extent that it is not possible to carry out a meaningful search into the state of the art on the basis of all claims<br><br>Reason:<br><br>The claims of the application are considered to relate to subject matter excluded from patentability under Art. 52(2) and (3) EPC and formulated to merely specify commonplace features relating to a technological implementation of such matter to such an extent that a meaningful search is not possible. The examiner could not determine any technical solution defined in response to a problem within the content of the application as originally filed. Any problems which are addressed do not appear to require a technical, but rather an administrative or organisational, i.e. business, solution. Whilst the implementation of such solutions may include the use of generic technical features these merely serve their well known functions as would be recognised by the skilled person in the technical field under consideration.<br><br>The applicant's attention is drawn to the fact that a search may be carried out during examination following a declaration of no search under Rule 45 EPC, should the problems which led to the declaration being issued be overcome (see EPC Guideline C-VI, 8.5).<br>----- | **CLASSIFICATION OF THE APPLICATION (IPC)**<br><br>INV.<br>G06Q10/00 |

| Place of search | Date | Examiner |
|---|---|---|
| The Hague | 10 July 2006 | Bassanini, A |

EPO FORM 1504 (P04C37)

EP 1 840 806 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 0082878 A

### Non-patent literature cited in the description

- **S. NETESSINE ; R. SHUMSKY.** Introduction to the Theory and Practice of Yield Management. *INFORMS Transactions on Education,* 2002, vol. 3 (1

- The Theory and Practice of Revenue Management. Kluwer Academic Publishers, 18